(19) Europäisches Patentamt

European Patent Office

Office européen des brevets

(11) Publication number: **0 527 434 A2**

# EUROPEAN PATENT APPLICATION

(21) Application number: **92113403.7**

(22) Date of filing: **06.08.92**

(51) Int. Cl.5: **F16D 69/02**, C04B 35/10, C04B 35/48, C04B 35/50

(30) Priority: **09.08.91 IT MI912239**

(43) Date of publication of application:
**17.02.93 Bulletin 93/07**

(84) Designated Contracting States:
**AT BE CH DE DK ES FR GB GR IE IT LI LU MC NL PT SE**

(71) Applicant: **CENTRO SVILUPPO MATERIALI S.p.A.**
**Via di Castel Romano 100-102**
**I-00129 Roma(IT)**

(72) Inventor: **Scaccia, Antonio**
**Via Ondola, 18**
**I-03029 Veroli (Prov. of Frosinone)(IT)**
Inventor: **Beber, Paolo**
**Frazione Casalino, 30B**
**I-38057 Pergine Valsugana (Prov. Trento)(IT)**
Inventor: **Zacchino, Roberto**
**Via Frizza, 20**
**I-38030 Capriana (Prov. of Trento)(IT)**

(74) Representative: **Gervasi, Gemma et al**
**NOTARBARTOLO & GERVASI Srl Viale Bianca Maria 33**
**I-20122 Milan (IT)**

(54) **Thermal barrier made from ceramic materials for braking devices.**

(57) The present invention relates to a thermal barrier made from ceramic materials for braking devices. According to a particular embodiment of the invention, said ceramic materials, in the case of disk brakes, are representing the surface coating of that side of the brake blocks which is in contact with the piston of the braking circuit.

EP 0 527 434 A2

## BACKGROUND OF THE INVENTION

### 1. FIELD OF THE INVENTION

The present invention relates to a thermal barrier made from ceramic materials for braking devices.

### 2. THE PRIOR ART

It is known that the braking devices, for instance the disk brakes of cars and motorcycles, generally undergo a high friction stress, engendering local overheating conditions which can allow the braking to be ineffective.

This is particularly occurring in the case of a braking repeated in a shortened period of time or of a particuarly powerful braking. There is thus registered such a kind of conditions that the removal of the engendered heat is not proportioned and the performance of the braking device is jeopardized.

For istance, as to the brake blocks for racing motorcycles, there were registered instability problems during the bracking bound to the sharp overheating and to the consequent boiling just of the hydraulic oil of the braking circuit.

It is known to resort to a few expedients for the heat removal, like for instance an increase of the braking surface, the use of a cooled disk and so on; however, from one side such solutions of the problem are involving precise limits (for instance the braking surface cannot be increased beyond certain limits) and from the other side the requirement of a more and more excellent performance is imposing the unceasing search of new more effective solutions. It was thus perceived the need for a thermal barrier for braking devices which be effective as to the removal of the heat (even of a particularly high heat) which is engendered locally and by pulses.

### DISCLOSURE

The Applicant has found that it is possible to obtain a satisfactory solution for the technical problem hereinabove, by realizing a coating of ceramic nature which has to be applied on the parts of the braking device suitable as thermal barrier in the points which are particualarly stressed by the overheating.

One object of the present invention is thus to realize a thermal barrier made from ceramic materials for braking devices; further objects will be made clear by the following detailed description of the invention.

### DETAILED DESCRIPTION OF THE INVENTION

According to the present invention it is possible to employ all the ceramic compositions which can be applied as a coating on metal surfaces, while fulfilling the task of the thermal barriers in the braking devices. However, preferably the ceramic coatings to be employed as a thermal barrier are selected from: alumina and titanium dioxide; zirconia and magnesium oxide; zirconia and yttria; zirconia and calcium oxide; zirconia, ceria and yttria. Particularly preferred are the ceramic coatings comprising:

$Al_2O_3$ + 13% $TiO_2$ $ZrO_2$ + 24% MgO
$ZrO_2$ + 8% $Y_2O_3$
$ZrO_2$ + 5% CaO
$ZrO_2$ + 25% $CeO_2$ + 2.5% $Y_2O_3$

(wherein the percentage is expressed as % by weight with respect to the alumina or zirconia component).

Particularly preferred are the ceramic powders like the ones hereinbelow, manufactured by the METCO Company:

METCO 130SF ALUMINA-TITANIA COMPOSITE POWDER
METCO 210, 210NS MAGNESIUM ZIRCONATE POWDER
METCO 204NS YTTRIA STABILIZED ZIRCONIA POWDER
METCO 201B-NS-1 ZIRCONIUM OXIDE COMPOSITE CERAMIC POWDER
METCO 205NS CERIA-YTTRIA-ZIRCONIA COMPOSITE POWDER

A preferred embodiment of the invention is providing for, between the metal surface and the ceramic coating, the insertion of a bonding layer of the Ni Al type. Such a layer can be realized employing a METCO 450 powder or a METCO 450NS powder. The thickness of the coatings is typically 400 $\mu$m, the first 100 $\mu$m being substantially consisting of the bonding layer.

Another particular embodiment of the thermal barriers according to the present invention provides for the use of the ceramic compounds in the traditional disk braking devices, comprising the application of a ceramic coating on the surface of the brake blocks contacting the piston of the hydraulic circuit. Said brake blocks are generally made from ferrous materials, preferably steel, or from aluminum.

The methods for the application of the ceramic coatings according to the invention are the ones known and recommended by the producers of ceramic materials. A preferred method is the plasma spraying in the air.

The advantages coming from the use of ceramic coatings as a thermal barrier for braking devices are mainly bound to the conceptual semplicity of the realization. Moreover it was experimentally ascertained that the effectiveness of the removal of the excess heat is largely satisfactory even on occasion of a very powerful stress in the braking circuit.

The following examples are supplied for illustrating purposes but do not limit in any way the scope of the invention. EXAMPLES In all the experimental tests there were used the following METCO powders:

450 P containing Ni Al (for the intermediate bonding layer)

$$130 \text{ SF} \quad " \quad Al_2O_3 + TiO_2 \ 13\%$$

$$210 \text{ NS} \quad " \quad MgO \ 24\% \ ZrO_2 \ 76\%$$

$$204 \text{ NS containing } ZrO_2 \ Y_2O_3$$

$$201 \text{ BNS} \quad " \quad ZrO_2 \ Y_2O_3$$

The deposition conditions, on an aluminum substrate (test plates) were as follows:
Deposition technique:
plasma spraying in the air by means of an ASEA plant having the following features:
spraying apparatus SNMI 4180
robot 112B/6
torch with an anode having two air injectors.

**Spraying conditions:**

| | |
|---|---|
| Intensity of the arch current: | 500 A |
| Measured voltage of the arch: | 65 V |
| Power: | 32.5 KW |
| Primary gas flow ($H_2$): | 40.6 l/min |
| Secondary gas flow (Ar): | 15.1 l/min |
| Pressure of the gas to be converted into plasma: | 0.79 bar |
| Control of the plasma console: | semiautomatic |
| Spraying angle: | 90° |
| Pre-heating of the bonding layer: | 100°C min. |
| Scanning: | 2.5 mm |

Under the operative conditions hereinabove there were prepared 9 specimen, consisting of small aluminum plates showing a coating having an overall thickness of 400 $\mu$m, wherein part of the thickness was consisting of a bonding layer made from METCO M 450 P powder.

**INSPECTION TEST**

The brake blocks, coated by the plasma spray technique, were tested on high performance motorcycles as well as on differently-powered traditional motorcycles. As a blank, other motorcycles were provided with traditional brake blocks.

The tests were carried out on circuits approved in view of competition races. They went on for one hour and were consisting of a series of sharp brakings, staggered in an irregular way, the braking times being variable, in order to stress as much as possible the whole braking system.

In the case of the motorcycles provided with traditional brakes there was observed the onset of braking faults (bound to the boiling of the oil) in at least 3 occurrences/motorcycle (8 occurrences/motorcycle in the case of high performance motorcycles), whereas in the motorcycles equipped according to the invention there were no braking faults.

**Claims**

1. A braking device characterized in that one or more of its parts are surface coated by ceramic materials behaving like a thermal barrier.

2. A braking device according to claim 1, wherein said coated parts are consisting of brake blocks.

3. A braking device according to claim 1, wherein said ceramic materials are selected from the materials comprising:
   alumina and titanium dioxide;
   zirconia and magnesium oxide;
   zirconia and yttria;
   zirconia and calcium oxide;
   zirconia, ceria and yttria.

4. A braking device according to claim 1, wherein said ceramic materials are selected from the materials substantially showing the following compositions:

   $Al_2O_3$ + 13% $TiO_2$;
   $ZrO_2$ + 24% $MgO$;
   $ZrO_2$ + 8% $Y_2O_3$;
   $ZrO_2$ + 5% $CaO$;
   $ZrO_2$ + 25% $CeO_2$ + 2.5% $Y_2O_3$;

   (the percentage being expressed as % b.w. with respect to the alumina or zirconia component).

5. A braking device according to claim 1, wherein the ceramic materials are obtained from one or more of the METCO ceramic powders hereinbelow:
   - METCO 130SF ALUMINA-TITANIA COMPOSITE POWDER;
   - METCO 210, 210NS MAGNESIUM ZIRCONATE POWDER;
   - METCO 204NS YTTRIA STABILIZED ZIRCONIA POWDER;
   - METCO 201B-NS-1 ZIRCONIUM OXIDE COMPOSITE CERAMIC POWDER;
   - METCO 205NS CERIA-YTTRIA-ZIRCONIA COMPOSITE POWDER.

6. A braking device according to claim 1, wherein the thickness of the coating is substantially 400 $\mu$m, the first 100 $\mu$m being substantially consisting of a bonding layer.

7. A process for the realization of a thermal barrier for a braking device, characterized in that a surface coating of ceramic materials is deposited on the parts of said device undergoing overheating.

8. A process according to claim 7, wherein said ceramic materials are selected from the ones comprising:
   alumina and titanium dioxide;
   zirconia and magnesium oxide;
   zirconia and yttria;
   zirconia and calcium oxide;
   zirconia, ceria and yttria.

9. A process according to claim 7, wherein said ceramic materials are selected from the ones substantially showing the following compositions:

4

$Al_2O_3$ + 13% $TiO_2$;
$ZrO_2$ + 24% MgO;
$ZrO_2$ + 8% $Y_2O_3$;
$ZrO_2$ + 5% CaO;
$ZrO_2$ + 25% $CeO_2$ + 2.5% $Y_2O_3$;

(the percentage being expressed as % b.w. with respect to the alumina component or to the zirconia component).

10. A process according to claim 7, wherein said ceramic materials are obtained from the METCO ceramic powders hereinbelow:
- METCO 130SF ALUMINA-TITANIA COMPOSITE POWDER;
- METCO 210, 210NS MAGNESIUM ZIRCONATE POWDER;
- METCO 204NS YTTRIA STABILIZED ZIRCONIA POWDER;
- METCO 201B-NS-1 ZIRCONIUM OXIDE COMPOSITE CERAMIC POWDER; - METCO 205NS CERIA-YTTRIA-ZIRCONIA COMPOSITE POWDER.

11. A process according to claim 7, wherein the thickness of the coating is substantially 400 $\mu$m, the first 100 $\mu$m being substantially consisting of a bonding layer.

12. A process according to claim 7, wherein the coating is applied by means of a plasma spraying in the air.

13. Use of ceramic materials for the realization of thermal barriers in braking devices.